# EUROPÄISCHE PATENTANMELDUNG

(11) **EP 4 786 204 A1**
(43) Veröffentlichungstag der Anmeldung: **05.08.2026**
(21) Anmeldenummer: 25225717.5
(22) Anmeldetag: 19.12.2025
(51) Int. Cl.: B60B 17/00, B60B 37/04, C09D 5/08, B61F 19/00

(54) **RADSATZANORDNUNG FÜR SCHIENENFAHRZEUGE**

(30) Priorität: 31.01.2025 AT 500672025
(71) Anmelder: Siemens Mobility Austria GmbH, 1210 Wien (AT)
(72) Erfinder: Boronkai, Laszlo, 8020 Graz (AT)
(74) Vertreter: Siemens Patent Attorneys

(57) **Zusammenfassung**

Die Erfindung betrifft eine Radsatzanordnung für Schienenfahrzeuge, umfassend zumindest einen Radsatz (3) mit zumindest einer Radsatzwelle (4), einem ersten Rad (5) und einem zweiten Rad (6), wobei der zumindest eine Radsatz (3) mit zumindest einer ersten Korrosionsschutzbeschichtung (8) beschichtet ist.

Es wird vorgeschlagen, dass die zumindest erste Korrosionsschutzbeschichtung (8) eine erste Mehrzahl an farbveränderlichen Pigmenten umfasst, wodurch die zumindest erste Korrosionsschutzbeschichtung (8) als belastungssensitive und/oder beschädigungssensitive erste Beschichtung ausgeführt ist, wobei eine erste Farbe der zumindest ersten Korrosionsschutzbeschichtung (8) bei mechanischer Belastung und/oder bei mechanischer Beschädigung des zumindest einen Radsatzes (3) lokal und irreversibel veränderbar ist.

Dadurch wird ein Prüfprozess der Radsatzanordnung vereinfacht.

## Beschreibung

Radsatzanordnung für Schienenfahrzeuge, umfassend zumindest einen Radsatz mit zumindest einer Radsatzwelle, einem ersten Rad und einem zweiten Rad, wobei der zumindest eine Radsatz mit zumindest einer ersten Korrosionsschutzbeschichtung beschichtet ist.

Bei Radsatzanordnungen für Schienenfahrzeuge handelt es sich um sicherheitsrelevante Komponenten, die vor Korrosion geschützt sein müssen und bei welchen eine rechtzeitige Erkennung von übermäßigen Belastungen, übermäßigen Beanspruchungen und Schäden bedeutsam ist. Beispielsweise müssen Radsatzwellen häufig hohen Belastungen, insbesondere auf Biegung und Torsion, standhalten. Es ist auch möglich, dass Radsatzanordnungen stoßartig belastet werden und/oder dass Fremdobjekte (wie z.B. Schotter aus einem Gleisbett) auf die Radsatzanordnungen aufprallen und beispielsweise Kerben in den Radsatzwellen verursachen. Durch Materialermüdung aufgrund beispielsweise periodischer Belastung der Radsatzwellen und einer daraus resultierenden starken Materialbeanspruchung können z.B. Risse in den Radsatzwellen verursacht werden.

Radsatzwellen werden während ihrer Produktion durch zerstörende und/oder zerstörungsfreie Prüfungen kontrolliert. Als zerstörungsfreie Prüfungen können beispielsweise Ultraschallprüfungen oder Magnetpulverprüfungen vorgenommen werden.

Laut der Europäischen Norm (EN) 15313 sind während einer Lebensdauer der Radsatzwellen zerstörungsfreie Prüfungen erforderlich.

Zum Schutz gegen Korrosion und gegen mechanische Belastungen (z.B. Stöße oder Einwirkung von Strahlmitteln, siehe EN 13261) kann es erforderlich sein, Schutzbeschichtungen auf die Radsatzwellen aufzubringen.

Mittels Ultraschallprüfungen können häufig nicht alle mechanischen Störungen oder Schäden auf den Radsatzwellen erkannt werden, weshalb an den Radsatzwellen oft Magnetpulverprüfungen zusätzlich zu den Ultraschallprüfungen durchgeführt werden. Zur Durchführung der Magnetpulverprüfungen kann es erforderlich sein, die Schutzbeschichtungen der Radsatzwellen vor den Magnetpulverprüfungen von den Radsatzwellen zu entfernen. Nach Durchführung der Magnetpulverprüfungen müssen die Schutzbeschichtungen dann oft neuerlich auf die Radsatzwellen aufgebracht werden. Dies führt häufig zu material- und zeitaufwendigen Instandhaltungsvorgängen, da die Schutzbeschichtungen oft eine Mehrzahl an Schichten aufweisen und im Hinblick auf ein Aufbringen der Schutzbeschichtungen auf die Radsatzwellen beispielsweise Trocknungszeiten sowie erforderliche Prozessbedingungen (z.B. im Hinblick auf eine Luftfeuchtigkeit etc.) berücksichtigt werden müssen.

Aus dem Stand der Technik ist beispielsweise die WO 2018/166949 A1 bekannt, in welcher eine ballistische Schutzanordnung für Fahrzeuge beschrieben ist. Die Schutzanordnung umfasst eine Schale mit einer Materialschicht, die einen Faserwerkstoff aufweist. Die Schale ist um eine Radsatzwelle eines Schienenfahrzeugs anordenbar.

Weiterhin zeigt die WO 2014/195080 A2 eine lackierte Radsatzwelle für ein Schienenfahrzeug, auf welcher eine Schlagschutzbeschichtung aufgebracht ist.

Ferner ist in der EP 1 995 178 A1 eine Sicherheitstasche mit einem Verschlusssystem offenbart, wobei das Verschlusssystem ein thermochromes Sicherheitselement aufweist. Das Sicherheitselement ist mit einem Verschlussteil der Sicherheitstasche verbunden und wird temperaturabhängig aktiviert und verfärbt. Dadurch kann ein thermisch unterstützter Öffnungsversuch der Sicherheitstasche detektiert werden. Das Sicherheitselement kann auch chemochrom ausgebildet sein, wodurch eine Manipulation der Sicherheitstasche mittels eines chemischen Lösungsmittels ein Farbsignal bewirkt, über welches die Manipulation erkannt werden kann.

Darüber hinaus zeigt die WO 2018/115654 A1 eine reversible piezosensitive Beschichtung zur Erkennung von Stößen auf eine Trägerplatte. Die Beschichtung ist auf die Trägerplatte aufgebracht. Piezochrome Pigmente sind in einem Polymer-Matrixmaterial verteilt, wodurch die Beschichtung in Abhängigkeit eines definierten Druckschwellwerts ihre Farbe ändern kann.

Weiterhin ist in der WO 2017/194882 A1 eine wärmesensitive Beschichtung mit einer Matrix und thermochromen Pigmenten offenbart, wobei die Matrix aus Epoxidharz oder Polyurethan besteht und die Pigmente ein metallisches Zentrum sowie Liganden umfassen. Eine Temperaturschwelle zur Auslösung einer temperaturbedingten Verfärbung der Beschichtung kann einen Wert zwischen 50 °C und 180 °C haben.

Der Erfindung liegt die Aufgabe zugrunde, eine gegenüber dem Stand der Technik weiterentwickelte Radsatzanordnung mit einer Fehleranzeige bereitzustellen.

Erfindungsgemäß wird diese Aufgabe gelöst mit einer Radsatzanordnung gemäß Anspruch 1, bei der die zumindest erste Korrosionsschutzbeschichtung eine erste Mehrzahl an farbveränderlichen Pigmenten umfasst, wodurch die zumindest erste

Korrosionsschutzbeschichtung als belastungssensitive und/oder beschädigungssensitive erste Beschichtung ausgeführt ist, wobei eine erste Farbe der zumindest ersten Korrosionsschutzbeschichtung bei mechanischer Belastung und/oder bei mechanischer Beschädigung des zumindest einen Radsatzes lokal und irreversibel veränderbar ist.

Mit der ersten Korrosionsschutzbeschichtung kann beispielsweise die Radsatzwelle beschichtet sein. Die erste Korrosionsschutzbeschichtung kann aber auch auf anderen Radsatzkomponenten aufgebracht sein.

Ist die Radsatzwelle mit der ersten Korrosionsschutzbeschichtung beschichtet, so können durch diese Maßnahme Bereiche der Radsatzwelle, in welchen sich beispielsweise durch einen Steinschlag eine Kerbe oder durch eine übermäßige Materialbeanspruchung ein Riss gebildet hat, durch Sichtinspektion erkannt werden, da eine Farbveränderung der ersten Korrosionsschutzbeschichtung aufgrund einer Aktivierung von einzelnen Pigmenten der Mehrzahl an farbveränderlichen Pigmenten in jenen Bereichen der Radsatzwelle, in welchen z.B. ein starker Stoß oder eine Rissbildung aufgetreten ist, örtlich definiert erfolgt. Diese Bereiche sind daher, beispielsweise durch Wartungs- und Instandhaltungspersonal, rasch wahrnehmbar und es können rasch Radsatzreparatur- oder Radsatztauschmaßnahmen vorgenommen werden. Bei einer Wartung und/oder Instandhaltung der Radsatzanordnung kann auf eine vollständige Entfernung der ersten Korrosionsschutzbeschichtung (wie sie beispielsweise eine Magnetpulverprüfung erfordert) verzichtet werden. Eine etwaige Reparatur der Radsatzwelle und/oder der Korrosionsschutzbeschichtung kann zielgerichtet und ortsspezifisch durchgeführt werden.

Die erste Mehrzahl an farbveränderlichen Pigmenten kann beispielsweise in einem Herstellvorgang der ersten Korrosionsschutzbeschichtung beigemengt werden, die erste Korrosionsschutzbeschichtung mit der Mehrzahl an farbveränderlichen Pigmenten kann danach (beispielsweise in flüssigem Zustand) auf die Radsatzwelle aufgetragen werden etc.

Die Mehrzahl an farbveränderlichen Pigmenten kann z.B. gleichmäßig oder in einzelnen Schichten in der Korrosionsschutzbeschichtung verteilt sein.

Es ist möglich, dass die erste Mehrzahl an farbveränderlichen Pigmenten z.B. lediglich Pigmente eines Typs (z.B. aus einem bestimmten Werkstoff) aufweist. Vorstellbar ist es aber auch, dass die erste Mehrzahl an farbveränderlichen Pigmenten Pigmente unterschiedlichen Typs (z.B. aus unterschiedlichen Werkstoffen) umfasst.

Ein zur Visualisierung von Fehlern oder Schäden etc. der Radsatzwelle geeigneter Volumen-oder Massenanteil der ersten Mehrzahl an farbveränderlichen Pigmenten bezüglich eines Trägermaterials der Korrosionsschutzbeschichtung kann beispielsweise mittels Prüfstandversuchen (z.B. Echtkörper- oder Kleinkörperversuche), bei welchen die Radsatzwelle oder Radsatzmaterialproben beispielsweise belastet wird oder werden, bis sich ein Riss bildet und eine Farbveränderung der ersten Korrosionsschutzbeschichtung eintritt, definiert werden. Hierbei kann, wenn die Mehrzahl an farbveränderlichen Pigmenten z.B. piezochrome Pigmente umfasst, beispielsweise eine Auslösung der Farbveränderung in Abhängigkeit eines Druckschwellwerts eingestellt werden.

Ein Massenanteil der ersten Mehrzahl an farbveränderlichen Pigmenten bezüglich einer Gesamtmasse der ersten Korrosionsschutzbeschichtung kann beispielsweise mit 3 Massen-% angesetzt werden etc.

Zur Analyse von Auswirkungen von Steinschlag auf die erste Korrosionsschutzbeschichtung und deren Verfärbung bei Belastung und/oder Beschädigung können beispielsweise auch ballistische Tests durchgeführt werden etc.

Beispielsweise kann die erste Mehrzahl an farbveränderlichen Pigmenten so ausgewählt sein, dass die erste Korrosionsschutzbeschichtung eine Farbveränderung zeigt, wenn eine Aufprallenergie von 90 J oder größer auf sie einwirkt etc. Für eine Analyse der Farbveränderung der ersten Korrosionsschutzbeschichtung bei einer Einwirkung einer Aufprallenergie auf die erste Korrosionsschutzbeschichtung kann beispielsweise ein Umgebungstemperaturbereich zwischen -25 °C und Raumtemperatur betrachtet werden etc.

Die erste Farbe der ersten Korrosionsschutzbeschichtung ist irreversibel veränderbar. Das bedeutet, dass nach Einwirkung einer mechanischen Belastung auf die erste Korrosionsschutzbeschichtung oder nach einem Auftreten einer Beschädigung der ersten Korrosionsschutzbeschichtung die erste Korrosionsschutzbeschichtung ihre Farbveränderung beibehält, damit die Farbveränderung zu einem späteren Zeitpunkt inspiziert werden kann.

Weitere vorteilhafte Ausgestaltungen der erfindungsgemäßen Radsatzanordnung ergeben sich aus den Unteransprüchen.

Günstig ist es, wenn die erste Mehrzahl an farbveränderlichen Pigmenten chemochrome erste Pigmente umfasst.

Durch diese Maßnahme wird eine Farbveränderung der ersten Korrosionsschutzbeschichtung aufgrund eines Kontakts der ersten Korrosionsschutzbeschichtung mit chemischen Substanzen wie z.B. mit wässrigen Lösungsmitteln oder Gasen ermöglicht.

Eine Aktivierung der ersten Pigmente, welche zu einer Farbveränderung der ersten Korrosionsschutzbeschichtung führt, kann beispielsweise durch Ionen (z.B. von Aluminium, Eisen und/oder Chrom) ausgelöst werden, welche von der ersten Mehrzahl an farbveränderlichen Pigmenten umfasst sein können, oder welche beispielsweise durch den Kontakt der ersten Korrosionsschutzbeschichtung mit chemischen Substanzen gebildet werden können.

Hilfreich kann es aber auch sein, wenn die erste Mehrzahl an farbveränderlichen Pigmenten piezochrome zweite Pigmente umfasst.

Dadurch wird eine druck- oder flächenpressungsbeeinflusste Farbveränderung der ersten Korrosionsschutzbeschichtung ermöglicht. Die zweiten Pigmente können beispielsweise aus einer chemischen Verbindung umfassend Kupfer, Molybdän, Wolfram und Sauerstoff gebildet sein etc. Die Farbveränderung der ersten Korrosionsschutzbeschichtung kann z.B. dadurch irreversibel sein, dass sich durch einen mechanischen Druck auf die zweiten Pigmente deren Kristallstrukturen stark ändern. Eine derartige Kristallstrukturänderung kann beispielsweise dann eintreten, wenn ein Stein mit großer Aufprallenergie auf den korrosionsschutzbeschichteten Radsatz aufprallt, wodurch z.B. eine bleibende Deformation oder eine Kerbe in der ersten Korrosionsschutzbeschichtung ausgebildet wird etc.

Zur Visualisierung eines übermäßig starken Wärmeeintrags in das erste Rad kann es beispielsweise auch empfehlenswert sein, wenn zumindest das erste Rad mit einer zweiten Korrosionsschutzbeschichtung beschichtet ist, welche eine zweite Mehrzahl an thermochromen dritten Pigmenten umfasst, wodurch die zweite Korrosionsschutzbeschichtung als temperatursensitive zweite Beschichtung ausgeführt ist, wobei eine zweite Farbe der zweiten Korrosionsschutzbeschichtung bei Erwärmung des ersten Rads irreversibel veränderbar ist. Die zweite Korrosionsschutzbeschichtung kann beispielsweise auf einen Radsteg des ersten Rads aufgebracht sein. Dadurch wird beispielsweise erkennbar, ob ein zur Bremsung auf eine Lauffläche des ersten Rads gepresster Bremsklotz einer Klotzbremse eine übermäßige Temperatur des ersten Rads verursacht. Die zweite Mehrzahl an thermochromen dritten Pigmenten kann beispielsweise Spinübergangspigmente mit Metallzentren und Liganden umfassen, welche bei einer Übergangstemperatur von ca. 150 °C ihre Spinkonfiguration verändern und dadurch eine Farbveränderung der zweiten Korrosionsschutzbeschichtung bewirken. Eine Definition von Volumens- oder Massenanteilen und einer temperaturbasierten Auslöseschwelle der dritten Pigmente kann beispielsweise nach jenem im Zusammenhang mit der ersten Mehrzahl an farbveränderlichen Pigmenten beschriebenen Prinzip mittels Prüfstandversuchen vorgenommen werden.

Eine Radsatzlager-Heißläuferüberwachung wird ermöglicht, wenn mit dem zumindest einen Radsatz zumindest ein erstes Radsatzlager verbunden ist, welches von einem ersten Radsatzlagergehäuse ummantelt ist, wobei das erste Radsatzlagergehäuse zumindest teilweise mit einer dritten Korrosionsschutzbeschichtung beschichtet ist, welche eine dritte Mehrzahl an thermochromen vierten Pigmenten umfasst, wodurch die dritte Korrosionsschutzbeschichtung als temperatursensitive dritte Beschichtung ausgeführt ist, wobei eine dritte Farbe der dritten Korrosionsschutzbeschichtung bei Erwärmung des ersten Radsatzlagergehäuses irreversibel veränderbar ist.

Das erste Radsatzlagergehäuse kann beispielsweise vollständig mit der dritten Korrosionsschutzbeschichtung beschichtet sein. Es ist aber auch möglich, lediglich einzelne Bereiche des ersten Radsatzlagergehäuses mit der dritten Korrosionsschutzbeschichtung zu beschichten, in welchen z.B. bei einem Radsatzlagerschaden eine besonders starke Erwärmung zu erwarten ist (beispielsweise Bereiche, welche mit einem Innenring und einem Außenring des ersten Radsatzlagers fluchten etc.). Denkbar ist es z.B. auch, dass die dritte Korrosionsschutzbeschichtung auf einen Lagerdeckel des ersten Radsatzlagergehäuses aufgetragen ist, etc. Die vierten Pigmente können beispielsweise chemisch gleich wie die dritten Pigmente ausgeführt sein. Eine Definition von Volumens- oder Massenanteilen und einer temperaturbasierten Auslöseschwelle der vierten Pigmente kann beispielsweise nach jenem im Zusammenhang mit der ersten Mehrzahl an farbveränderlichen Pigmenten beschriebenen Prinzip mittels Prüfstandversuchen vorgenommen werden.

Hilfreich kann es auch sein, wenn zumindest die erste Korrosionsschutzbeschichtung zumindest eine erste Schicht und eine zweite Schicht aufweist.

Die erste Schicht kann beispielsweise als eine die zweite Schicht abdeckende und vor Umgebungseinflüssen schützende Deckschicht ausgebildet sein. Dadurch kann ein Schutz der zweiten Schicht, in welcher z.B. die erste Mehrzahl an farbveränderlichen Pigmenten angeordnet sein kann, erreicht werden. Die erste Mehrzahl an farbveränderlichen Pigmenten kann beispielsweise ausschließlich in der zweiten Schicht angeordnet sein, während die erste Schicht frei von der ersten Mehrzahl an farbveränderlichen Pigmenten sein kann. Dadurch kann die erste Mehrzahl an farbveränderlichen Pigmenten durch die erste Schicht geschützt sein. Es ist jedoch auch möglich, dass die erste Mehrzahl an farbveränderlichen Pigmenten beispielsweise sowohl in der ersten Schicht als auch in der zweiten Schicht angeordnet ist. Die erste Mehrzahl an farbveränderlichen Pigmenten kann z.B. Pigmente aus unterschiedlichen Materialien umfassen, wobei beispielsweise Pigmente aus einem ersten Material ausschließlich in der ersten Schicht und Pigmente aus einem zweiten Material ausschließlich in der zweiten Schicht angeordnet sein können etc. Es ist jedoch auch möglich, dass beispielsweise in der ersten Schicht oder/und in der zweiten Schicht jeweils Pigmente aus unterschiedlichen Materialien angeordnet sind, etc.

Eine Vorzugslösung erhält man, wenn die zumindest eine Radsatzwelle mit der zumindest ersten Korrosionsschutzbeschichtung beschichtet ist, wobei die erste Mehrzahl an farbveränderlichen Pigmenten teilweise an einer Oberfläche der zumindest ersten Korrosionsschutzbeschichtung, welche einer Umgebung der zumindest einen Radsatzwelle zugewandt ist, und teilweise an die zumindest eine Radsatzwelle angrenzend angeordnet ist. Durch diese Maßnahme können beispielsweise Oberflächenfehler der ersten Korrosionsschutzbeschichtung (die beispielsweise durch Steinschlag verursacht sein können), aber auch Strukturveränderungen unterhalb der Oberfläche (die beispielsweise durch Risse in der Radsatzwelle verursacht sein können) durch eine Farbveränderung der ersten Korrosionsschutzbeschichtung angezeigt werden.

Bei einem mehrschichtigen Aufbau der ersten Korrosionsschutzbeschichtung kann es auch empfehlenswert sein, wenn die zumindest eine Radsatzwelle mit der zumindest ersten Korrosionsschutzbeschichtung beschichtet ist, wobei die erste Schicht einer Umgebung der zumindest einen Radsatzwelle zugewandt ist, wobei die zweite Schicht an die zumindest eine Radsatzwelle angrenzend angeordnet ist, und wobei die erste Mehrzahl an farbveränderlichen Pigmenten teilweise in der ersten Schicht und teilweise in der zweiten Schicht angeordnet ist. Auch durch diese Maßnahme können beispielsweise sowohl Oberflächenfehler der ersten Korrosionsschutzbeschichtung als auch Strukturveränderungen unterhalb der Oberfläche durch eine Farbveränderung der ersten Korrosionsschutzbeschichtung angezeigt werden.

Eine selektive Anzeige von Fehlern oder Schäden der Radsatzwelle wird ermöglicht, wenn die erste Mehrzahl an farbveränderlichen Pigmenten zumindest fünfte Pigmente einer ersten Pigmentgruppe und sechste Pigmente einer zweiten Pigmentgruppe umfasst, wobei die fünften Pigmente und die sechsten Pigmente in unterschiedlichen Materialien ausgeführt sind, und wobei die fünften Pigmente an der Oberfläche der zumindest ersten Korrosionsschutzbeschichtung oder in der ersten Schicht angeordnet sind und die sechsten Pigmente an die zumindest eine Radsatzwelle angrenzend oder in der zweiten Schicht angeordnet sind.

Beispielsweise können dadurch Druckschwellwerte, die zu einer Aktivierung der fünften Pigmente und der sechsten Pigmente und folglich zu einer Farbveränderung der ersten Korrosionsschutzbeschichtung führen, unterschiedlich sein. Es ist aber auch möglich, dass z.B. eine Aktivierung der fünften Pigmente zu einer anderen Farbe der ersten Korrosionsschutzbeschichtung führt als eine Aktivierung der sechsten Pigmente, etc. Ferner ist es denkbar, dass sich die fünften Pigmente von den sechsten Pigmenten im Hinblick auf ihre Wirkprinzipien voneinander unterscheiden etc.

Im Zusammenhang mit unterschiedlichen Materialien für die fünften Pigmente und die sechsten Pigmente kann es günstig sein, wenn die fünften Pigmente als piezochrome fünfte Pigmente und die sechsten Pigmente als chemochrome sechste Pigmente ausgebildet sind.

Mittels der piezochromen fünften Pigmente können beispielsweise stoßartige Belastungen auf die Oberfläche der ersten Korrosionsschutzbeschichtung (z.B. aufgrund von Steinschlag) durch erste Farbveränderungen der ersten Korrosionsschutzbeschichtung angezeigt werden (da die piezochromen fünften Pigmente auf einen mechanischen Druck reagieren), während mittels der chemochromen sechsten Pigmente z.B. Risse in der ersten Korrosionsschutzbeschichtung und in der Radsatzwelle durch zweite Farbveränderungen der ersten Korrosionsschutzbeschichtung visualisiert werden können (da die chemochromen sechsten Pigmente auf ein im Bereich der

Risse eindringendes Gas oder eine eindringende Flüssigkeit reagieren).

Im Hinblick auf eine Einstellung eines farbveränderlichen Verhaltens der ersten Mehrzahl an farbveränderlichen Pigmenten (z.B. in Abhängigkeit eines mechanischen Drucks etc.) kann es hilfreich sein, wenn zumindest die erste Mehrzahl an farbveränderlichen Pigmenten metall-und/oder halbmetallhaltig ist.

Die erste Mehrzahl an farbveränderlichen Pigmenten kann beispielsweise als Metall Eisen, Kupfer, Aluminium oder Chrom oder als Halbmetall Silizium enthalten etc.

Insbesondere zur Erzielung chemochromer Farbeffekte kann es empfehlenswert sein, wenn zumindest die erste Mehrzahl an farbveränderlichen Pigmenten ionenhaltig ist.

Beispielsweise kann die erste Mehrzahl an farbveränderlichen Pigmenten Eisen(II)Ionen enthalten, welche aufgrund einer Oxidationsreaktion aus Eisen unter Einfluss von Sauerstoff und Wasser gebildet werden und zu Eisen(II)-Hydroxid reagieren können. Das Eisen(II)-Hydroxid kann zu Eisen(III)-Hydroxid oxidieren, woraus Rost gebildet werden kann. Der gebildete Rost kann anhand seiner rot-bräunlichen Färbung visuell detektiert werden.

Ein starke Isolationswirkung gegenüber korrosiven Gasen und Flüssigkeiten kann erzielt werden, wenn zumindest die erste Korrosionsschutzbeschichtung als kunstharz-, naturharz, öl-und/oder kunststoffhaltige erste Beschichtung ausgebildet ist.

Zumindest die erste Korrosionsschutzbeschichtung kann beispielsweise als epoxidharzhaltige oder polyurethanhaltige erste Beschichtung ausgebildet sein. Dies ist vorteilhaft, da eine solche erste Beschichtung einerseits eine starke Isolationswirkung gegenüber korrosiven Gasen und Flüssigkeiten aufweist sowie leicht verarbeitbar ist und andererseits ein geeignetes Trägermaterial für zumindest die erste Mehrzahl an farbveränderlichen Pigmenten darstellt.

Ein erfolgversprechendes Anwendungsgebiet für die erfindungsgemäße Radsatzanordnung kann mit einem Schienenfahrzeug mit zumindest einer erfindungsgemäßen Radsatzanordnung erschlossen werden.

Insbesondere bei Schienenfahrzeugen, mit welchen oft eine hohe Anzahl an Passagieren und große Frachtvolumina mit teils hohen Geschwindigkeiten transportiert werden und bei welchen eine hohe Zuverlässigkeit bedeutsam ist, ist eine rechtzeitige und unkomplizierte Erkennung von Fehlern und Schäden von Fahrzeugkomponenten wichtig, um Risiken im Hinblick auf Unfälle und langwierige, wartungsbedingte Fahrzeug-Stillstandzeiten zu reduzieren.

Nachfolgend wird die Erfindung anhand von Ausführungsbeispielen näher erläutert.

Es zeigen beispielhaft:

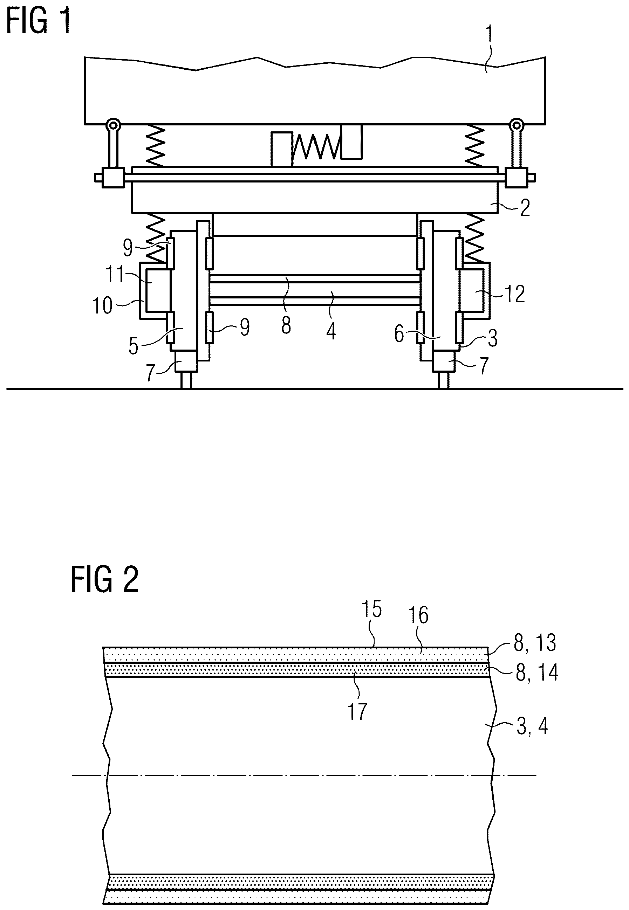

- Fig. 1:: Einen Seitenriss eines Ausschnitts aus einer beispielhaften Ausführungsvariante eines erfindungsgemäßen Schienenfahrzeugs mit einer beispielhaften ersten Ausführungsvariante einer erfindungsgemäßen Radsatzanordnung in geschnittener Darstellung, wobei eine Radsatzwelle, Räder und Radsatzlagergehäuse mit Korrosionsschutzbeschichtungen beschichtet sind, welche farbveränderliche Pigmente umfassen, und
- Fig. 2:: Einen Seitenriss eines Ausschnitts aus einer beispielhaften zweiten Ausführungsvariante einer erfindungsgemäßen Radsatzanordnung für ein Schienenfahrzeug mit einer Radsatzwelle in geschnittener Darstellung, wobei die Radsatzwelle mit einer Korrosionsschutzbeschichtung beschichtet ist, welche zwei Schichten aufweist, in welchen farbveränderliche Pigmente angeordnet sind.

Fig. 1 zeigt einen Seitenriss eines Ausschnitts aus einer beispielhaften Ausführungsvariante eines erfindungsgemäßen Schienenfahrzeugs mit einer beispielhaften ersten Ausführungsvariante einer erfindungsgemäßen Radsatzanordnung in geschnittener Darstellung.

Ein Wagenkasten 1 des Schienenfahrzeugs ist federnd auf einem Fahrwerksrahmen 2 eines Fahrwerks des Schienenfahrzeugs abgestützt und mit dem Fahrwerksrahmen 2 verbunden. Das Fahrwerk weist die Radsatzanordnung auf. Der Fahrwerksrahmen 2 ist wiederum federnd auf einem Radsatz 3 der Radsatzanordnung abgestützt. Der Radsatz 3 ist um eine eigene Längsachse drehbar mit dem Fahrwerksrahmen 2 gekoppelt.

Der Radsatz 3 ist in Stahl ausgebildet und umfasst eine Radsatzwelle 4, ein erstes Rad 5 sowie ein zweites Rad 6, wobei das erste Rad 5 und das zweite Rad 6 fest mit der Radsatzwelle 4 verbunden und auf einem Gleis 7 einer Bahninfrastruktur abgestützt sind.

Erfindungsgemäß ist es auch denkbar, dass der Radsatz 3 als Losradsatz mit Losrädern und Losradsatzwellenstummeln ausgeführt ist, etc.

Die Radsatzwelle 4 ist mit einer ersten Korrosionsschutzbeschichtung 8 beschichtet, welche eine erste Mehrzahl an farbveränderlichen, chemochromen ersten Pigmenten umfasst. Dadurch ist die erste Korrosionsschutzbeschichtung 8 als beschädigungssensitive erste Beschichtung ausgeführt. Eine erste Farbe der ersten Korrosionsschutzbeschichtung 8 ist dadurch bei mechanischer Beschädigung der Radsatzwelle 4 und der ersten Korrosionsschutzbeschichtung 8 (beispielsweise aufgrund eines Risses oder einer Deformation etc.) lokal und irreversibel veränderbar.

Erfindungsgemäß ist es auch denkbar, dass die ersten Pigmente als piezochrome erste Pigmente ausgeführt sind oder dass die erste Mehrzahl an farbveränderlichen Pigmenten eine Mischung aus chemochromen ersten Pigmenten und piezochromen zweiten Pigmenten umfasst, etc.

Sind die ersten Pigmente als piezochrome erste Pigmente ausgeführt oder umfasst die erste Mehrzahl an farbveränderlichen Pigmenten eine Mischung aus chemochromen ersten Pigmenten und piezochromen zweiten Pigmenten, so ist die erste Korrosionsschutzbeschichtung 8 als rein belastungssensitive oder als belastungs- und beschädigungssensitive erste Beschichtung ausgeführt, wobei die erste Farbe der ersten Korrosionsschutzbeschichtung 8 bei mechanischer Belastung (z.B. bei Steinschlag mit einer Aufprallenergie von zumindest 90 J) oder bei mechanischer Belastung oder Beschädigung der Radsatzwelle 4 und der ersten Korrosionsschutzbeschichtung 8 lokal und irreversibel veränderbar ist.

Ein Radsteg des ersten Rads 5 ist mit einer zweiten Korrosionsschutzbeschichtung 9 beidseitig beschichtet, wobei eine Radnabe und ein Radkranz des ersten Rads 5 ausgespart sind.

Die zweite Korrosionsschutzbeschichtung 9 umfasst eine zweite Mehrzahl an thermochromen dritten Pigmenten, wodurch die zweite Korrosionsschutzbeschichtung 9 als temperatursensitive zweite Beschichtung ausgeführt ist. Dadurch ist eine zweite Farbe der zweiten Korrosionsschutzbeschichtung 9 bei Erwärmung des ersten Rads 5 irreversibel veränderbar. Wird beispielsweise ein in Fig. 1 nicht gezeigter Bremsklotz einer Klotzbremse zur Durchführung einer Bremsung des Schienenfahrzeugs an eine Lauffläche des ersten Rads 5 angelegt und erwärmt sich dadurch das erste Rad 5 im Bereich des Radstegs übermäßig, so dass eine thermische Überbeanspruchung eines Radmaterials des ersten Rads 5 droht, so kann ein solcher Zustand durch eine Veränderung der zweiten Farbe angezeigt werden.

Das zweite Rad 6 ist nach jenem für das erste Rad 5 beschriebenen Prinzip beschichtet.

Mit der Radsatzwelle 4 sind außerhalb eines von dem ersten Rad 5 und dem zweiten Rad 6 begrenzten Bereichs ein erstes Radsatzlager und ein zweites Radsatzlager verbunden, welche in Fig. 1 nicht sichtbar sind.

Das erste Radsatzlager ist von einem ersten Radsatzlagergehäuse 11 ummantelt, das zweite Radsatzlager von einem zweiten Radsatzlagergehäuse 12. Über das erste Radsatzlager und das erste Radsatzlagergehäuse 11 sowie über das zweite Radsatzlager und das zweite Radsatzlagergehäuse 12 ist der Radsatz 3 um seine Längsachse drehbar mit dem Fahrwerksrahmen gekoppelt.

Das erste Radsatzlagergehäuse 11 ist an einer Grundfläche, an einer Deckfläche sowie an einem Radsatzlagerdeckel mit einer dritten Korrosionsschutzbeschichtung 10 beschichtet. Die dritte Korrosionsschutzbeschichtung 10 umfasst eine dritte Mehrzahl an thermochromen vierten Pigmenten, wodurch die dritte Korrosionsschutzbeschichtung 10 als temperatursensitive dritte Beschichtung ausgeführt ist. Dadurch ist eine dritte Farbe der dritten Korrosionsschutzbeschichtung 10 bei Erwärmung des ersten Radsatzlagergehäuses 11 irreversibel veränderbar. Eine derartige Farbveränderung tritt beispielsweise dann ein, wenn sich das erste Radsatzlagergehäuse 11 aufgrund eines Schadens des ersten Radsatzlagers übermäßig erwärmt. Dadurch wird eine Heißläuferüberwachung des ersten Radsatzlagers realisiert.

Das zweite Radsatzlagergehäuse 12 ist nach jenem für das erste Radsatzlagergehäuse 11 beschriebenen Prinzip beschichtet.

Die erste Korrosionsschutzbeschichtung 8, die zweite Korrosionsschutzbeschichtung 9 und die dritte Korrosionsschutzbeschichtung 10 sind als epoxidharz- und somit kunstharzhaltige Beschichtungen ausgebildet und weisen jeweils eine Dicke von 200 µm auf, wobei erfindungsgemäß auch andere Dicken vorstellbar sind.

Erfindungsgemäß ist es jedoch auch denkbar, dass die erste Korrosionsschutzbeschichtung 8, die zweite Korrosionsschutzbeschichtung 9 und die dritte Korrosionsschutzbeschichtung 10 polyurethan-, naturharz- oder ölhaltig sind oder andere Kunstharze oder Kunststoffe enthalten, etc.

Epoxidharze fungieren somit als Trägermittel für die ersten Pigmente, die dritten Pigmente und die vierten Pigmente. Die ersten Pigmente sind der ersten Korrosionsschutzbeschichtung 8, die dritten Pigmente der zweiten Korrosionsschutzbeschichtung 9 und die vierten Pigmente der dritten Korrosionsschutzbeschichtung 10 beigemengt.

Ein Massenanteil der ersten Pigmente, der dritten Pigmente und der vierten Pigmente bezüglich Gesamtmassen der ersten Korrosionsschutzbeschichtung 8, der zweiten Korrosionsschutzbeschichtung 9 und der dritten Korrosionsschutzbeschichtung 10 beträgt jeweils 3 Massen-%, wobei erfindungsgemäß auch andere Massenanteile denkbar sind.

Die erste Mehrzahl an farbveränderlichen Pigmenten ist eisen- und somit metallhaltig. Bildet sich beispielsweise ein Riss in der Radsatzwelle 4, klafft dadurch die erste Korrosionsschutzbeschichtung 8 auf und dringt dadurch Sauerstoff sowie Wasser zu, sodass die ersten Pigmente teilweise freiliegen und mit Sauerstoff sowie Wasser in Kontakt kommen, so werden aufgrund einer Oxidationsreaktion aus Eisen unter Einfluss von Sauerstoff und Wasser Eisen(II)lonen gebildet (die erste Mehrzahl an farbveränderlichen Pigmenten ist damit ionenhaltig), welche folglich zu Eisen(II)-Hydroxid reagieren. Das Eisen(II)-Hydroxid oxidiert zu Eisen(III)-Hydroxid, woraus Rost gebildet wird. Der gebildete Rost kann anhand seiner rot-bräunlichen Färbung visuell detektiert werden und zeigt den Riss an. Die Färbung wird mit einer Rissentstehung und einem Kontakt der ersten Pigmente mit Sauerstoff und Wasser ausgebildet und bleibt bestehen, ist also irreversibel. Die Färbung ist auch lokal auf einen Rissbereich begrenzt, da nur jene ersten Pigmente, welche mit Sauerstoff und Wasser in Kontakt kommen, verfärbt werden.

Die zweite Mehrzahl an thermochromen dritten Pigmenten und die dritte Mehrzahl an thermochromen vierten Pigmenten umfassen Spinübergangspigmente mit Metallzentren mit d⁵-Orbitalen und Liganden mit OH-Gruppen an ihren Resten, wobei die Spinübergangspigmente bei einer Übergangstemperatur von 150 °C ihre Spinkonfiguration verändern und dadurch Farbveränderungen der zweiten Korrosionsschutzbeschichtung 9 und der dritten Korrosionsschutzbeschichtung 10 bewirken.

Die Farbveränderungen sind irreversibel, d.h. sie treten mit Erreichen der Übergangstemperatur ein und bleiben auch bei Abkühlung der zweiten Korrosionsschutzbeschichtung 9 und der dritten Korrosionsschutzbeschichtung 10 bestehen. Die Farbveränderungen sind auch lokal begrenzt, da nur jene dritten Pigmente und jene vierten Pigmente, welche zumindest auf die Übergangstemperatur erwärmt werden, ihre Spinkonfiguration verändern.

In Fig. 2 ist ein Seitenriss eines Ausschnitts aus einer beispielhaften zweiten Ausführungsvariante einer erfindungsgemäßen Radsatzanordnung für ein Schienenfahrzeug mit einem Radsatz 3 mit einer Radsatzwelle 4 in geschnittener Darstellung dargestellt. Räder des Radsatzes 3 sind in Fig. 2 nicht gezeigt.

Die Radsatzwelle 4 ist mit einer ersten Korrosionsschutzbeschichtung 8 beschichtet, welche als epoxidharz- und somit kunstharzhaltige erste Beschichtung ausgeführt ist und eine erste Mehrzahl an farbveränderlichen Pigmenten umfasst. Ein Epoxidharz der ersten Korrosionsschutzbeschichtung 8 fungiert als Trägermittel für die erste Mehrzahl an farbveränderlichen Pigmenten, welche der ersten Korrosionsschutzbeschichtung 8 beigemengt sind. Die erste Korrosionsschutzbeschichtung 8 weist eine Gesamtdicke von 200 µm auf, wobei erfindungsgemäß auch andere Gesamtdicken denkbar sind.

Die erste Korrosionsschutzbeschichtung 8 ist aufgrund der ersten Mehrzahl an farbveränderlichen Pigmenten als belastungssensitive und beschädigungssensitive erste Beschichtung ausgeführt, wobei eine erste Farbe der ersten Korrosionsschutzbeschichtung 8 bei mechanischer Belastung und/oder bei mechanischer Beschädigung der Radsatzwelle 4 und der ersten Korrosionsschutzbeschichtung 8 lokal und irreversibel veränderbar ist.

Die erste Korrosionsschutzbeschichtung 8 weist eine erste Schicht 13, welche einer Umgebung der Radsatzwelle 4 zugewandt ist, und eine zweite Schicht 14, welche an die Radsatzwelle 4 angrenzend angeordnet ist, auf. Die erste Schicht 13 und die zweite Schicht 14 sind aneinander angrenzend angeordnet. Die erste Mehrzahl an farbveränderlichen Pigmenten ist teilweise in der ersten Schicht 13 und teilweise in der zweiten Schicht 14 angeordnet.

Die erste Mehrzahl an farbveränderlichen Pigmenten ist dabei teilweise unmittelbar an einer Oberfläche 15 der ersten Korrosionsschutzbeschichtung 8, welche der Umgebung der Radsatzwelle 4 zugewandt ist, und teilweise unmittelbar an die Radsatzwelle 4 angrenzend angeordnet.

Erfindungsgemäß ist es jedoch auch vorstellbar, dass beispielsweise die erste Schicht 13 frei von der ersten Mehrzahl an farbveränderlichen Pigmenten ist, etc.

Im Zusammenhang mit Fig. 1 sind farbveränderliche erste Pigmente, zweite Pigmente, dritte Pigmente und vierte Pigmente beispielhaft beschrieben.

Im Zusammenhang mit Fig. 2 umfasst die erste Mehrzahl an farbveränderlichen Pigmenten fünfte Pigmente einer ersten Pigmentgruppe 16 und sechste Pigmente einer zweiten Pigmentgruppe 17, wobei die fünften Pigmente und die sechsten Pigmente in unterschiedlichen Materialien ausgeführt sind.

Die fünften Pigmente sind in der ersten Schicht 13 und dabei teilweise an der Oberfläche 15 der ersten Korrosionsschutzbeschichtung 8 angeordnet, die sechsten Pigmente in der zweiten Schicht 14 und dabei teilweise an die Radsatzwelle 4 angrenzend.

Ein Massenanteil der fünften Pigmente und der sechsten Pigmente bezüglich einer Gesamtmasse der ersten Korrosionsschutzbeschichtung 8 beträgt 3 Massen-%, wobei erfindungsgemäß auch ein anderer Massenanteil vorstellbar ist.

Die fünften Pigmente sind als piezochrome fünfte Pigmente, welche aus einer chemischen Verbindung umfassend Kupfer, Molybdän, Wolfram und Sauerstoff gebildet sind, ausgeführt. Die fünften Pigmente sind somit metallhaltig. Aufgrund der fünften Pigmente ist die erste Korrosionsschutzbeschichtung 8 belastungssensitiv.

Ein Molekül dieser Verbindung umfasst ein Kupferatom und vier Sauerstoffatome. Eine erste Anzahl an Molybdänatomen und eine zweite Anzahl an Wolframatomen wird experimentell mittels ballistischer Prüfstandversuche zur Nachbildung von Steinschlag an einem Prüfkörper mit der ersten Korrosionsschutzbeschichtung 8 definiert. Hierbei wird eine chemische Verbindung ausgewählt, bei welcher die fünften Pigmente ab einer Aufprallenergie von 90 J mit einer Farbveränderung reagieren.

Die Farbveränderung der ersten Korrosionsschutzbeschichtung 8 ist dadurch irreversibel, dass sich durch einen mechanischen Druck auf die fünften Pigmente deren Kristallstrukturen stark ändern können. Eine derartige Kristallstrukturänderung tritt beispielsweise dann ein, wenn ein Stein mit großer Aufprallenergie auf die erste Korrosionsschutzbeschichtung 8 aufprallt, wodurch z.B. eine bleibende Deformation oder eine Kerbe in der ersten Korrosionsschutzbeschichtung 8 ausbildet wird, etc.

Die Farbveränderung der ersten Korrosionsschutzbeschichtung 8 aufgrund der fünften Pigmente ist auch lokal begrenzt, da nur jene fünften Pigmente, auf welche der mechanische Druck wirkt, verfärbt werden.

Die sechsten Pigmente sind als chemochrome sechste Pigmente ausgebildet. Die sechsten Pigmente sind wie jene im Zusammenhang mit Fig. 1 beispielhaft beschriebenen ersten Pigmente ausgeführt. Aufgrund der sechsten Pigmente ist die erste Korrosionsschutzbeschichtung 8 beschädigungssensitiv.

*Unabhängig vom grammatikalischen Geschlecht eines bestimmten Begriffes sind Personen mit männlicher, weiblicher oder anderer Geschlechteridentität mit umfasst.*

### Bezugszeichenliste

- 1: Wagenkasten
- 2: Fahrwerksrahmen
- 3: Radsatz
- 4: Radsatzwelle
- 5: Erstes Rad
- 6: Zweites Rad
- 7: Gleis
- 8: Erste Korrosionsschutzbeschichtung
- 9: Zweite Korrosionsschutzbeschichtung
- 10: Dritte Korrosionsschutzbeschichtung
- 11: Erstes Radsatzlagergehäuse
- 12: Zweites Radsatzlagergehäuse
- 13: Erste Schicht
- 14: Zweite Schicht
- 15: Oberfläche
- 16: Erste Pigmentgruppe
- 17: Zweite Pigmentgruppe

## Patentansprüche

1. Radsatzanordnung für Schienenfahrzeuge, umfassend zumindest einen Radsatz (3) mit zumindest einer Radsatzwelle (4), einem ersten Rad (5) und einem zweiten Rad (6), wobei der zumindest eine Radsatz (3) mit zumindest einer ersten Korrosionsschutzbeschichtung (8) beschichtet ist, **dadurch gekennzeichnet, dass** die zumindest erste Korrosionsschutzbeschichtung (8) eine erste Mehrzahl an farbveränderlichen Pigmenten umfasst, wodurch die zumindest erste Korrosionsschutzbeschichtung (8) als belastungssensitive und/oder beschädigungssensitive erste Beschichtung ausgeführt ist, wobei eine erste Farbe der zumindest ersten Korrosionsschutzbeschichtung (8) bei mechanischer Belastung und/oder bei mechanischer Beschädigung des zumindest einen Radsatzes (3) lokal und irreversibel veränderbar ist.

2. Radsatzanordnung nach Anspruch 1, **dadurch gekennzeichnet, dass** die erste Mehrzahl an farbveränderlichen Pigmenten chemochrome erste Pigmente umfasst.

3. Radsatzanordnung nach Anspruch 1 oder 2, **dadurch gekennzeichnet, dass** die erste Mehrzahl an farbveränderlichen Pigmenten piezochrome zweite Pigmente umfasst.

4. Radsatzanordnung nach einem der Ansprüche 1 bis 3, **dadurch gekennzeichnet, dass** zumindest das erste Rad (5) mit einer zweiten Korrosionsschutzbeschichtung (9) beschichtet ist, welche eine zweite Mehrzahl an thermochromen dritten Pigmenten umfasst, wodurch die zweite Korrosionsschutzbeschichtung (9) als temperatursensitive zweite Beschichtung ausgeführt ist, wobei eine zweite Farbe der zweiten Korrosionsschutzbeschichtung (9) bei Erwärmung des ersten Rads (5) irreversibel veränderbar ist.

5. Radsatzanordnung nach einem der Ansprüche 1 bis 4, **dadurch gekennzeichnet, dass** mit dem zumindest einen Radsatz (3) zumindest ein erstes Radsatzlager verbunden ist, welches von einem ersten Radsatzlagergehäuse (11) ummantelt ist, wobei das erste Radsatzlagergehäuse (11) zumindest teilweise mit einer dritten Korrosionsschutzbeschichtung (10) beschichtet ist, welche eine dritte Mehrzahl an thermochromen vierten Pigmenten umfasst, wodurch die dritte Korrosionsschutzbeschichtung (10) als temperatursensitive dritte Beschichtung ausgeführt ist, wobei eine dritte Farbe der dritten Korrosionsschutzbeschichtung (10) bei Erwärmung des ersten Radsatzlagergehäuses (11) irreversibel veränderbar ist.

6. Radsatzanordnung nach einem der Ansprüche 1 bis 5, **dadurch gekennzeichnet, dass** zumindest die erste Korrosionsschutzbeschichtung (8) zumindest eine erste Schicht (13) und eine zweite Schicht (14) aufweist.

7. Radsatzanordnung nach einem der Ansprüche 1 bis 6, **dadurch gekennzeichnet, dass** die zumindest eine Radsatzwelle (4) mit der zumindest ersten Korrosionsschutzbeschichtung (8) beschichtet ist, wobei die erste Mehrzahl an farbveränderlichen Pigmenten teilweise an einer Oberfläche (15) der zumindest ersten Korrosionsschutzbeschichtung (8), welche einer Umgebung der zumindest einen Radsatzwelle (4) zugewandt ist, und teilweise an die zumindest eine Radsatzwelle (4) angrenzend angeordnet ist.

8. Radsatzanordnung nach Anspruch 6, **dadurch gekennzeichnet, dass** die zumindest eine Radsatzwelle (4) mit der zumindest ersten Korrosionsschutzbeschichtung (8) beschichtet ist, wobei die erste Schicht (13) einer Umgebung der zumindest einen Radsatzwelle (4) zugewandt ist, wobei die zweite Schicht (14) an die zumindest eine Radsatzwelle (4) angrenzend angeordnet ist, und wobei die erste Mehrzahl an farbveränderlichen Pigmenten teilweise in der ersten Schicht (13) und teilweise in der zweiten Schicht (14) angeordnet ist.

9. Radsatzanordnung nach einem der Ansprüche 1 bis 8, **dadurch gekennzeichnet, dass** die erste Mehrzahl an farbveränderlichen Pigmenten zumindest fünfte Pigmente einer ersten Pigmentgruppe (16) und sechste Pigmente einer zweiten Pigmentgruppe (17) umfasst, wobei die fünften Pigmente und die sechsten Pigmente in unterschiedlichen Materialien ausgeführt sind.

10. Radsatzanordnung nach Anspruch 7 oder 8, **dadurch gekennzeichnet, dass** die erste Mehrzahl an farbveränderlichen Pigmenten zumindest fünfte Pigmente einer ersten Pigmentgruppe (16) und sechste Pigmente einer zweiten Pigmentgruppe (17) umfasst, wobei die fünften Pigmente und die sechsten Pigmente in unterschiedlichen Materialien ausgeführt sind, und wobei die fünften Pigmente an der Oberfläche (15) der zumindest ersten Korrosionsschutzbeschichtung (8) oder in der ersten Schicht (13) angeordnet sind und die sechsten Pigmente an die zumindest eine Radsatzwelle (4) angrenzend oder in der zweiten Schicht (14) angeordnet sind.

11. Radsatzanordnung nach Anspruch 9 oder 10, **dadurch gekennzeichnet, dass** die fünften Pigmente als piezochrome fünfte Pigmente und die sechsten Pigmente als chemochrome sechste Pigmente ausgebildet sind.

12. Radsatzanordnung nach einem der Ansprüche 1 bis 11, **dadurch gekennzeichnet, dass** zumindest die erste Mehrzahl an farbveränderlichen Pigmenten metall- und/oder halbmetallhaltig ist.

13. Radsatzanordnung nach einem der Ansprüche 1 bis 12, **dadurch gekennzeichnet, dass** zumindest die erste Mehrzahl an farbveränderlichen Pigmenten ionenhaltig ist.

14. Radsatzanordnung nach einem der Ansprüche 1 bis 13, **dadurch gekennzeichnet, dass** zumindest die erste Korrosionsschutzbeschichtung (8) als kunstharz-, naturharz, öl- und/oder kunststoffhaltige erste Beschichtung ausgebildet ist.

15. Radsatzanordnung nach Anspruch 14, **dadurch gekennzeichnet, dass** zumindest die erste Korrosionsschutzbeschichtung (8) als epoxidharzhaltige erste Beschichtung ausgebildet ist.

16. Radsatzanordnung nach Anspruch 14, **dadurch gekennzeichnet, dass** zumindest die erste Korrosionsschutzbeschichtung (8) als polyurethanhaltige erste Beschichtung ausgebildet ist.

17. Schienenfahrzeug mit zumindest einer Radsatzanordnung nach einem der Ansprüche 1 bis 16.
